# EUROPÄISCHE PATENTSCHRIFT

(11) **EP 3 485 961 B1**
(45) Veröffentlichungstag und Bekanntmachung des Hinweises auf die Patenterteilung: **13.09.2023**
(21) Anmeldenummer: 17400063.8
(22) Anmeldetag: 16.11.2017
(51) Int. Cl.: B01D 53/18, B01D 47/12, B01D 47/14, C01B 3/52

(54) **WASCHKOLONNE ZUR REINIGUNG VON GASSTRÖMEN**
WASH COLUMN FOR PURIFYING GAS STREAMS
COLONNE DE LAVAGE DESTINÉE AU NETTOYAGE DES FLUX GAZEUX

(43) Veröffentlichungstag der Anmeldung: 22.05.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Corbet, Sharon, 60438 Frankfurt am Main (DE); Frey, Christian, 69181 Leimen (DE); Leichner, Hincal, 65429 Hochheim (DE); Schmidt, Sophia, 60486 Frankfurt am Main (DE)
(74) Vertreter: Dropsch, Holger

(56) Entgegenhaltungen:
- EP-A1- 3 181 540
- DE-B- 1 293 135
- FR-A1- 2 961 115
- US-A- 1 715 252
- US-A- 4 002 705
- US-A1- 2013 009 101

## Beschreibung

### Gebiet der Erfindung

Die Erfindung betrifft eine Verwendung einer Waschkolonne zur Reinigung von kohlendioxidhaltigen Gasströmen, die beispielsweise als Abgasströme einer Feststoffvergasungsanlage und einer der Vergasungsanlage nachgeschalteten Anlage zur Abtrennung von Kohlendioxid und schwefelhaltigen Begleitgasen durch Gaswäsche erhalten werden.

Die Verwendung der Waschkolonne dient zur Abtrennung von Resten von Methanol als in der Gaswäsche verwendetes, erstes Absorptionsmittel und von Feststoffpartikeln aus einem kohlendioxidhaltigen Abgasstrom.

Die Erfindung betrifft ferner ein Verfahren zur Abtrennung von Resten von Methanol als in der Gaswäsche verwendetes Absorptionsmittel und von Feststoffpartikeln aus einem kohlendioxidhaltigen Abgasstrom.

### Stand der Technik

Waschkolonnen und ihre Verwendung zur Gasreinigung bzw. Gaswäsche sind dem Fachmann aus dem einschlägigen Stand der Technik bekannt. Bekannt ist auch die Verwendung solcher Waschkolonnen in Anlagenverbünden, die die Erzeugung von Rohsynthesegas durch Vergasung kohlenstoffhaltiger Einsatzstoffe, beispielsweise von AIP LIQUIDE-Aktenzeichen 2016P00211

Kohle, und die Aufarbeitung und Reinigung des Rohsynthesegas in einer der Vergasungsanlage nachgeschalteten Gasreinigungsanlage umfassen. So werden in Ullmann's Encyclopedia of Industrial Chemistry, 6. Aufl. Bd. 15, Vergasungsanlagen zur Herstellung von Synthesegas aus kohlenstoffhaltigen Einsatzstoffen auf S. 357 ff, und insbesondere Flugstromvergasungsanlagen auf S. 375 ff. beschrieben und das Rectisol-Verfahren zur Reinigung von Rohsynthesegas durch Gaswäsche mit tiefkaltem Methanol auf S. 399 ff. dargestellt.

Die vorliegende Erfindung befasst sich in einem speziellen Aspekt mit der Behandlung von Abgasen aus Flugstromvergasungsanlagen zur Kohlevergasung und aus denen nachgeschalteten, insbesondere nach dem Rectisol-Verfahren arbeitenden Gasreinigungsanlagen.

Das Rectisol-Verfahren verwendet als Absorptionsmittel tiefkaltes Methanol, wobei die Eigenschaft des Methanols ausgenutzt wird, dass seine Absorptionsfähigkeit für die Begleitstoffe mit abnehmender Temperatur stark zunimmt, während sie für Kohlenmonoxid (CO) und Wasserstoff (H₂) praktisch konstant bleibt. Zu den schwefelhaltigen Begleitgasen zählen Kohlendioxid (CO₂) sowie schwefelhaltige Komponenten, insbesondere Schwefelwasserstoff H₂S, aber auch Carbonylsulfid COS, Mercaptane RSH sowie weitere schwefelhaltige Komponenten, z. B. schwefelhaltige Kohlenwasserstoffe.

Beim Rectisol-Verfahren wird zwischen dem Standard-Verfahren und dem selektiven Rectisol-Verfahren unterschieden. Beim sogenannten Standard-Rectisol-Verfahren werden die Begleitgase COS/H₂S und das CO₂ dabei gemeinsam in einem Absorptionsschritt aus dem Rohsynthesegas abgetrennt.

Die hier vorgelegte Erfindung betrifft insbesondere das selektive Rectisol-Verfahren. Dieses ist in Ullmann's Encyclopedia of Industrial Chemistry, 6. Aufl. Bd. 15, Fig. 46, S. 401 schematisch dargestellt. Bei diesem selektiven Verfahren erfolgt die Abtrennung der schwefelhaltigen Begleitgase COS/H₂S und des Kohlendioxids aus dem Rohsynthesegas in zwei separaten, nacheinander ablaufenden Absorptionsschritten. Das als Waschmittel oder Absorptionsmittel verwendete Methanol wird dabei im Kreis geführt, wobei es verfahrensintern in einer Regenerierungsstufe wieder von den Begleitgasen befreit und sodann wieder als Absorptionsmittel eingesetzt wird. Die Abtrennung des Kohlendioxids aus dem Methanol erfolgt dabei in zwei aufeinander folgenden Schritten, im ersten Schritt durch schlagartige Druckentspannung (sog. Flashen) und im zweiten Schritt durch Hindurchleiten eines Hilfsgases oder Regenerierungsgases . (sog. Strippen). Als geeignete Strippgase können beispielsweise Wasserdampf, Stickstoff oder andere Gase oder Dämpfe verwendet werden, die sich hinsichtlich der absorbierten Stoffe und des Absorptionsmittels inert verhalten und die günstig verfügbar sind.

Das durch Flashen desorbierte Kohlendioxid kann beispielsweise als Hilfsgas in die Vergasungsanlage zurückgeführt und dort zum Bespannen des Schleusbehälters für den Vergasungseinsatz, beispielsweise Kohle, verwendet werden, da es ein hierfür geeignetes Druckniveau besitzt. Für das in mit Stickstoff aus dem beladenen Methanol heraus gestrippte Kohlendioxid besteht in den meisten Fällen dagegen keine wirtschaftlich sinnvolle Verwendungsmöglichkeit.

Beide kohlendioxidhaltigen Gasströme, sowohl der zuvor im Schleusbehälter verwendete Gasstrom, als auch der durch Strippen des CO₂-beladenen Methanols erhaltene Gasstrom, werden daher letztlich in die Atmosphäre abgegeben. Hierfür müssen aber beide Ströme vorher von ihrem jeweiligen Restmethanolgehalt befreit werden, mit dem sie die Regenerierungsstufe verlassen haben, sowie ferner von Feststoffpartikeln, beispielsweise von Brennstoffpartikeln, die bei der Verwendung im Schleusbehälter in das Gas gelangten. Hierzu werden häufig Waschkolonnen eingesetzt.

In der DE-Anmeldeschrift DE 10 2009 036 973 A1 ist die Verwendung des Kohlendioxids als Hilfsgas zum Bespannen des Schleusbehälters beschrieben. In der zu dieser Schrift gehörenden Zeichnung verlässt das häufig auch als lock-hopper-Gas bezeichnete Schleusbehälterabgas als Strom 3e den Schleusbehälter, wenn dieser entspannt wird. In diesem Fall werden die Feststoffpartikel durch einen Filter aus dem Schleusabgas abgetrennt, bevor das Restmethanol ausgewaschen wird. Nachteilig ist dabei, dass ein weiterer Verfahrensschritt, nämlich die Filtration, zur Abtrennung der Feststoffpartikel erforderlich ist,

Waschkolonnen zur Abscheidung von Methanol aus Abgasströmen von Rectisol-Anlagen, die an die Atmosphäre abgegeben werden sollen, werden häufig mit entmineralisiertem Wasser als Waschflüssigkeit bzw. Absorptionsmittel betrieben, da dieses eine gute Löslichkeit für das abzuscheidende Methanol aufweist. Die Stoffaustauschzone solcher Waschkolonnen ist zudem häufig als strukturierte Packung ausgestaltet, da strukturierte Packungen gute Stoffaustauscheigenschaften bei geringem Druckverlust bieten. Allerdings ist die Reinigung einer strukturierten Packung von darin abgesetzten Partikelablagerungen sehr schwierig, so dass eine Filtrationsstufe zur Abtrennung der Feststoffpartikel erforderlich ist, was mit zusätzlichem apparativem Aufwand verbunden ist. Zusätzlicher Stand der Technik wird in EP 3181540 A1 und FR 2961115 A1 offenbart.

Es bestand daher die Aufgabe, eine Waschkolonne zur Verfügung zu stellen, die zur mindestens teilweisen Abtrennung von Feststoffpartikeln und Resten eines ersten Absorptionsmittels aus einem kohlendioxidhaltigen Abgasstrom und in einem speziellen Aspekt insbesondere zum Verringern des Restmethanolgehalts auch aus partikelbeladenen Gasströmen eingesetzt werden kann und aus der Staubablagerungen mit geringerem Aufwand entfernbar sind.

### Beschreibung der Erfindung

Die der Erfindung zugrundeliegende Aufgabe wird im Wesentlichen durch die Verwendung einer Waschkolonne , wie sie in den Ansprüchen 1 und 10 definiert ist, gelöst.

### Erfindungsgemäße Waschkolonne:

Waschkolonne zur mindestens teilweisen Abtrennung von Feststoffpartikeln und Resten eines ersten Absorptionsmittels aus einem kohlendioxidhaltigen Abgasstrom, wobei der Abgasstrom umfasst:
- einen ersten kohlendioxidhaltigen Abgasteilstrom, erhalten aus einer Vergasungsanlage zur Erzeugung von Synthesegas aus kohlenstoffhaltigen Einsatzstoffen, wobei der erste Abgasteilstrom zusätzlich mit Feststoffpartikeln beladen ist,
- einen zweiten kohlendioxidhaltigen Abgasteilstrom, erhalten aus einer der Vergasungsanlage nachgeschalteten Anlage zur Abtrennung von Kohlendioxid und schwefelhaltigen Begleitgasen aus dem Synthesegas durch Absorption mit dem ersten Absorptionsmittel,
   wobei die Waschkolonne folgende Bestandteile und Baugruppen umfasst:
   - einen Mantel, der sich - bezogen auf einen bestimmungsgemäß angeordneten Zustand der Waschkolonne - entlang einer parallel zur Vertikalen verlaufenden Längsachse erstreckt und der einen Innenraum umschließt, wobei der Innenraum in einen oberen und einen unteren Bereich unterteilt ist, die jeweils eine Stoffaustauschzone umfassen,
   - eine im oberen Bereich des Innenraums angeordnete, strukturierte Packung zur Abtrennung von Resten des ersten Absorptionsmittels aus dem zweiten Abgasteilstrom durch Absorption mit einem zweiten Absorptionsmittel,
   - einen oberhalb der strukturierten Packung angeordneten Einlass für das zweite Absorptionsmittel,
   - einen unterhalb der strukturierten Packung angeordneten Einlass für den zweiten Abgasteilstrom,
   - eine im unteren Bereich des Innenraums und unterhalb des Einlasses für den zweiten Abgasteilstrom angeordnete Füllkörperpackung,
   - einen unterhalb der Füllkörperpackung angeordneten Einlass für den ersten, mit Feststoffpartikeln beladenen Abgasteilstrom,
   - einen an der Oberseite des Mantels angeordneten Auslass für den von Resten des ersten Absorptionsmittels und von Feststoffpartikeln befreiten, kohlendioxidhaltigen Abgasstrom,
   - einen an der Unterseite des Mantels angeordneten Auslass für das mit Resten des ersten Absorptionsmittels und mit Feststoffpartikeln beladene zweite Absorptionsmittel.

Die Feststoffpartikel entstammen dabei beispielsweise den verwendeten, kohlenstoffhaltigen Einsatzstoffen, beispielsweise Kohle. Möglich ist aber auch ein Anteil an Feststoffpartikeln im Gas, der aus Schlackepartikeln oder Partikeln gebildet wird, die bei der mechanischen Beanspruchung einer Vergasungsanlage, beispielsweise durch Abrieb, erzeugt werden.

Zu den schwefelhaltigen Begleitgasen zählt insbesondere Schwefelwasserstoff H₂S, aber auch Carbonylsulfid COS, Mercaptane RSH sowie weitere schwefelhaltige Komponenten, z. B. schwefelhaltige Kohlenwasserstoffe.

Im Sinne der vorliegenden Erfindung wird unter Absorption insbesondere die Gaswäsche mit geeigneten Waschmitteln oder Absorptionsmitteln verstanden. Gängige Verfahren zur Abtrennung von Kohlendioxid und/oder schwefelhaltigen Begleitgasen sind beispielsweise das Rectisol-Verfahren oder das Purisol-Verfahren. Als erste Absorptionsmittel wird dabei tiefkaltes Methanol im Rectisol-Verfahren bzw. N-Methylpyrrolidon (NMP) in wäßriger Lösung im Purisol-Verfahren verwendet. Beide Substanzen sind sehr gut in Wasser löslich.

Unter Fluidverbindung zwischen zwei Bereichen, Bestandteilen, Bauteilen oder Baugruppen wird dabei jegliche Art von Verbindung verstanden, die es ermöglicht, dass ein Fluid von dem einen zu dem anderen der beiden Bereiche, Bestandteile, Bauteile oder Baugruppen strömen kann, unbeachtlich etwaiger zwischengeschalteter Bereiche, Bestandteile, Bauteile oder Baugruppen.

Als Füllkörperpackung werden im Rahmen der vorliegenden Erfindung im weiteren Sinne auch Schüttungen körniger Feststoffe verstanden, die sich gegenüber den beteiligten fluiden Medien chemisch inert verhalten.

Als Feststoffabtrennungsvorrichtung wird eine Vorrichtung verstanden, die nach einem mechanischen Trennverfahren zur Abtrennung von Feststoffpartikeln aus Fluiden arbeitet. Bevorzugt wird dabei insbesondere die Filtration verwendet; Beispiele für mögliche weitere Trennverfahren sind die Sedimetation, Zentrifugation oder Dekantation. Diese Trennverfahren können dabei einzeln oder in Kombination verwendet werden. Die abgetrennten Feststoffpartikel können dabei in der Feststoffabtrennungsvorrichtung gespeichert oder zwischengespeichert und/oder über einen Auslass aus dieser ausgeleitet werden.

Bei den genannten Schleusbehältern der Vergasungsanlage handelt es sich um Zwischenbehätter oder durch Wände abgegrenzte, in der Regel gasdichte Zwischenbereiche, die dem Einleiten fester Einsatzstoffe und/oder Brennstoffe in die Vergasungsanlage bzw. dem Ausleiten fester Nebenprodukte, z. B. Schlacke oder Asche aus der Vergasungsanlage dienen. Die Zwischenspeicherung der genannten Feststoffe dient dabei insbesondere der Zwischenbevorratung, so das ein kontinuierlicher oder semikontinuierlicher Feststoffstrom in die bzw. aus der Vergasungsanlage gewährleistet werden kann. Weiterhin dienen die Schleusbehälter der Druckeinstellung und/oder der Einstellung einer gewünschten inerten oder reaktiven Gasatmosphäre, wobei die gewünschten Gase als Spülgase, Inertisierungsgase und/oder Druckeinstellungsgase verwendet werden. Partikelhaltige Gasströme können daneben in Vergasungsanlagen, beispielsweise in Flugstromvergasungsanlagen, als Transportgase bei der pneumatischen Förderung von Feststoffen, beispielsweise der festen Einsatzstoffe, erhalten werden.

Unter einem am Trennboden angeordneten Auslass wird ein Auslass verstanden, der geeignet ist, die auf dem Trennboden angesammelte flüssige Phase aus der Waschkolonne kontinuierlich auszuleiten, so dass ein Fluten des Trennbodens durch Aufstauen der flüssigen Phase verhindert wird.

Der erfindungsgemäße Aufbau der Waschkolonne hat den Vorteil, dass die Partikelbeladung des aus der Feststoffvergasungsanlage und dort insbesondere, aber nicht ausschließlich aus dem Schleusbehälter stammenden Abgasstroms bereits beim Durchgang durch die Füllkörperpackung abgetrennt wird und nicht mit dem Gas in die darüber liegende strukturierte Packung gelangt. Zur Reinigung von Partikelablagerungen kann eine Füllkörperpackung sehr viel einfacher aus der Kolonne entnommen und wiedereingesetzt werden als eine strukturierte Packung. Die strukturierte Packung lässt sich nur sehr aufwendig reinigen und wird in der erfindungsgemäßen Waschkolonne effektiv vor Verschmutzung durch Partikelablagerungen geschützt.

Die der Erfindung zugrundeliegende Aufgabe wird auch gelöst durch die Verwendung der Waschkolonne nach Anspruch 1 und ein Verfahren zur mindestens teilweisen Abtrennung von Feststoffpartikeln und Resten eines ersten Absorptionsmittels aus einem kohlendioxidhaltigen Abgasstrom nach Anspruch 10:

### Erfindungsgemäße Verwendung:

Verwendung einer Waschkolonne nach Anspruch 1 und 7 bis 9 zur Abtrennung von Resten von Methanol als erstem Absorptionsmittel aus einem kohlendioxidhaltigen Abgasstrom einer Vergasungsanlage zur Erzeugung von Synthesegas aus kohlenstoffhaltigen Einsatzstoffen und einer der Vergasungsanlage nachgeschalteten Anlage zur Abtrennung von Kohlendioxid und schwefelhaltigen Begleitgasen aus dem Synthesegas durch Absorption mit Methanol, wobei als zweites Absorptionsmittel Wasser verwendet wird.

### Erfindunosoemäßes Verfahren:

Verfahren zur mindestens teilweisen Abtrennung von Feststoffpartikeln und Resten eines ersten Absorptionsmittels aus einem kohlendioxidhaltigen Abgasstrom, wobei der Abgasstrom umfasst:
- einen ersten kohlendioxidhaltigen Abgasteilstrom, erhalten aus einer Vergasungsanlage zur Erzeugung von Synthesegas aus kohlenstoffhaltigen Einsatzstoffen, wobei der erste Abgasteilstrom zusätzlich mit Feststoffpartikeln beladen ist,
- einen zweiten kohlendioxidhaltigen Abgasteilstrom, erhalten aus einer der Vergasungsanlage nachgeschalteten Anlage zur Abtrennung von Kohlendioxid und schwefelhaltigen Begleitgasen aus dem Synthesegas durch Absorption mit dem ersten Absorptionsmittel,
   umfassend folgende Verfahrensschritte:
   (a) Bereitstellen des ersten kohlendioxidhaltigen Abgasteilstroms und des zweiten kohlendioxidhaltigen Abgasteilstroms,
   (b) Bereitstellen einer Waschkolonne , wie sie in Anspruch 10 definiert ist,
   (c) Zuführen des ersten kohlendioxidhaltigen Abgasteilstroms, beladen mit Feststoffpartikeln und Resten des ersten Absorptionsmittels, zu der Waschkolonne,
   (d) Zuführen des zweiten kohlendioxidhaltigen Abgasteilstroms, beladen mit Resten des ersten Absorptionsmittels, zu der Waschkolonne,
   (e) Zuführen eines Stroms des zweiten Absorptionsmittels zu der Waschkolonne,
   (f) Ausleiten eines mindestens teilweise von Feststoffpartikeln und Resten des ersten Absorptionsmittels befreiten, kohlendioxidhaltigen Abgasstroms aus der Waschkolonne,
   (g) Ausleiten des mit den abgetrennten Feststoffpartikeln und Resten des ersten Absorptionsmittels beladenen Stroms des zweiten Absorptionsmittels aus der Waschkolonne.

Weitere und bevorzugte Ausgestaltungen der Erfindung finden sich in den jeweiligen abhängigen Ansprüchen.

### Bevorzugte Ausgestaltungen der Erfindung

Eine bevorzugte Ausgestaltung der Waschkolonne gemäß der Erfindung besteht darin, dass diese ferner umfasst:
- einen Trennboden, der für aufwärts strömende Gase passierbar, aber für abwärts strömende Flüssigkeiten unpassierbar ist und der unterhalb der strukturierten Packung und unterhalb des Eintritts für den zweiten Abgasteilstrom, aber oberhalb der Füllkörperpackung angeordnet ist,
- einen zweiten Einlass für das zweite Absorptionsmittel, der unterhalb des Trennbodens und oberhalb der Füllkörperpackung angeordnet ist,
- einen Auslass zum Ausleiten des mit Resten des ersten Absorptionsmittels beladenen zweiten Absorptionsmittels von dem Trennboden.

Auf diese Weise werden die Waschflüssigkeiten, die über die strukturierte Packung und die über die Füllkörperpackung geführt werden, getrennt gehalten. Dadurch wird das Volumen der über die Füllkörperpackung und dabei mit Partikeln beladenen Flüssigkeit klein gehalten. Ferner besteht die Möglichkeit, die beiden Waschflüssigkeiten getrennt aufzuarbeiten und zu regenerieren, wodurch die Effizienz der Aufarbeitung bzw. Regenerierung erhöht wird.

Eine gängige Ausgestaltung des Trennbodens ist seine Ausführung als Kaminboden. Da das benutzte Waschmittel, das auf dem Kaminboden gesammelt wird, nicht mit Feststoffpartikeln beladen ist, treten vorteilhafterweise Partikelablagerungen auf dem Trennboden, insbesondere dem Kaminboden, nicht auf.

Eine weitere bevorzugte Ausgestaltung der erfindungsgemäßen Waschkolonne besteht darin, dass der zweite Einlass für das zweite Absorptionsmittel, der unterhalb des Trennbodens und oberhalb der Füllkörperpackung angeordnet ist, und der an der Unterseite des Mantels angeordnete Auslass für das mit Resten des ersten Absorptionsmittels und mit Feststoffpartikeln beladene zweite Absorptionsmittel miteinander in Fluidverbindung stehen, wobei die Waschkolonne ferner umfasst:
- eine Feststoffabtrennungsvorrichtung zur Abtrennung von Feststoffpartikeln aus dem zweiten Absorptionsmittel, die mit dem der an der Unterseite des Mantels angeordneten Auslass in Fluidverbindung steht,
- einen Auslass zum Ausleiten des von Feststoffpartikeln mindestens teilweise befreiten, zweiten Absorptionsmittels aus der Feststoffabtrennungsvorrichtung, der mit dem zweiten Einlass für das zweite Absorptionsmittel in Fluidverbindung steht, sodass das von Feststoffpartikeln mindestens teilweise befreite, zweite Absorptionsmittel zu der Waschkolonne zurückgeführt werden kann.

Auf diese Weise können die in der unteren Stoffaustauschzone aus dem ersten in das zweite Absorptionsmittel abgegebenen Feststoffpartikel aus letzterem abgetrennt und das zweite Absorptionsmittel sodann in der Waschkolonne wiederverwendet werden, wodurch der Verbrauch des zweiten Absorptionsmittels reduziert wird.

In Bezug auf die erfindungsgemäße Verwendung der Waschkolonne besteht eine bevorzugte Ausgestaltung darin, dass es sich bei der Vergasungsanlage um eine Flugstromvergasungsanlage handelt, in der feinpartikuläre Kohle zu durch Vergasung zu Synthesegas umgesetzt wird. Bei dieser Art der Synthesegaserzeugung fallen erhebliche Mengen von Abgasen an, die mit Feststoffpartikeln beladen sind und die daher vorteilhaft in der erfindungsgemäßen Waschkolonne gereinigt werden können.

Ferner ist es in Bezug auf die erfindungsgemäße Verwendung der Waschkolonne vorteilhaft, wenn es sich bei dem ersten kohlendioxidhaltigen, mit Feststoffpartikeln beladen Abgasteilstrom um Schleusbehälter-Abgas aus der Vergasungsanlage und bei dem zweiten kohlendioxidhaltigen Abgasteilstrom um Abgas aus der Anlage zur Abtrennung von Kohlendioxid und schwefelhaltigen Begleitgasen handelt, das dort bei der Regenerierung des verwendeten, ersten Absorptionsmittels zweiten kohlendioxidhaltigen Abgasteilstrom erhalten wird. Dieser Anlagenverbund zwischen Vergasungsanlage und Reinigung des Rohsynthesegases durch Absorption, die sogenannte Gaswäsche, tritt häufig auf, sodass sich in diesen Fällen die Aufgabe ergibt, sowohl das mit Feststoffpartikeln beladene Schleusbehälter-Abgas aus der Vergasungsanlage als auch einen bei der Regenerierung des verwendeten, ersten Absorptionsmittels erhaltenen Abgasstrom zu reinigen. Beide Abgasströme enthalten in der Regel Kohlendioxid.

Bevorzugt wird in Bezug auf die erfindungsgemäße Verwendung der Waschkolonne der zweite kohlendioxidhaltige Abgasteilstrom mindestens teilweise zu der Vergasungsanlage zurückgeführt und dort in dem oder den Schleusbehältern als Spülgas, Transportgas, Inertisierungsgas und/oder Druckeinstellungsgas verwendet, wobei Schleusbehälter-Abgas erhalten wird. Auf diese Weise wird der aus der Gaswäsche stammende, zweite kohlendioxidhaltige Abgasteilstrom vor seiner Reinigung nochmals genutzt, wodurch Frischgase zur Beschickung des oder der Schleusbehälter, eingespart werden. Dabei wird dieser Abgasteilstrom mit Feststoffpartikeln beladen und kann daher in der erfindungsgemäßen Waschkolonne vorteilhaft gereinigt werden.

Weiterhin ist es in Bezug auf die erfindungsgemäße Verwendung der Waschkolonne vorteilhaft, wenn es sich bei dem als zweites Absorptionsmittel verwendeten Wasser zur Beaufschlagung der strukturierten Packung um entmineralisiertes Frischwasser und bei dem Wasser zur Beaufschlagung der Füllkörperpackung um entmineralisiertes, im Kreislauf über eine Feststoffabtrennungsvorrichtung geführtes Wasser handelt und wenn aus dem Kreislauf ein Wasserspülstrom ausgeleitet und ein Frischwasserstrom als Ergänzungsstrom eingeleitet wird. Wasser besitzt gute Eigenschaften als Lösungsmittel für zahlreiche erste Absorptionsmittel und ist umweltneutral und kostengünstig verfügbar. Durch die beschriebene, differenzierte Verwendung als Frischwasser und als Kreislaufwasser werden weitere Kostenvorteile erhalten. Als erste Absorptionsmittel können beispielsweise Methanol oder N-Methylpyrrolidon (NMP) in wäßriger Lösung verwendet werden. Beide Substanzen sind sehr gut in Wasser löslich.

In weiterer bevorzugter Ausgestaltung der Erfindung werden das zur Beaufschlagung der strukturierten Packung verwendete Wasser und der Wasserspülstrom gemeinsam oder getrennt durch Destillation von ihrer Methanolbeladung befreit, wobei das dabei abgetrennte Methanol mindestens teilweise als erstes Absorptionsmittel in der Anlage zur Abtrennung von Kohlendioxid und schwefelhaltigen Begleitgasen wiederverwendet wird und das dabei abgetrennte Wasser mindestens teilweise zur Beaufschlagung der Füllkörperpackung wiederverwendet wird. Hierdurch werden Vorteile bei der Aufarbeitung des als zweites Absorptionsmittel verwendeten Wassers erzielt. Nach erfolgter Aufarbeitung können sodann das erste Absorptionsmittel Methanol zumindest teilweise in die Anlage zur Abtrennung von Kohlendioxid und schwefelhaltigen Begleitgasen und das zweite Absorptionsmittel Wasser zumindest teilweise in die erfindungsgemäße Waschkolonne zurückgeführt und dort wiederverwendet werden.

Eine besondere Ausgestaltung des erfindungsgemäßen Verfahrens sieht vor, dass - die bereitgestellte Waschkolonne gemäß Anspruch 7 oder 8 ausgestaltet ist, also einen Trennboden oder speziell einen Kaminboden als Trennboden umfasst,
- ein Teilstrom des zweiten Absorptionsmittels über den oberhalb der strukturierten Packung angeordneten Einlass in die Waschkolonne eingeleitet und über den am Trennboden angeordneten Auslass ausgeleitet wird,
- ein weiterer Teilstrom, des zweiten Absorptionsmittels über den unterhalb des Trennbodens und oberhalb der Füllkörperpackung angeordneten Einlass in die Waschkolonne eingeleitet und über den an der Unterseite des Mantels angeordneten Auslass ausgeleitet wird.

Auf diese Weise können zwei Kreisläufe für das zweite Absorptionsmittel aufgebaut und die Aufarbeitung bzw. Regenerierung des zweiten Absorptionsmittels spezifisch daran angepasst werden, ob eine Abtrennung von Feststoffpartikeln erforderlich ist oder nicht.

In weiterer besonderer Ausgestaltung des erfindungsgemäßen Verfahrens ist das erste Absorptionsmittel Methanol und das zweite Absorptionsmittel Wasser und der kohlendioxidhaltige Abgasstrom wird beim Betrieb einer Vergasungsanlage zur Erzeugung von Synthesegas aus kohlenstoffhaltigen Einsatzstoffen und einer der Vergasungsanlage nachgeschalteten Anlage zur Abtrennung von Kohlendioxid und schwefelhaltigen Begleitgasen aus dem Synthesegas durch Absorption mit Methanol erhalten. Methanol ist ein bewährtes Absorptionsmittel für diese Trennaufgaben, beispielsweise im Rectisol-Verfahren. Wasser besitzt gute Eigenschaften als Lösungsmittel für Methanol und ist umweltneutral und kostengünstig verfügbar. Durch die beschriebene, differenzierte Verwendung als Frischwasser und als Kreislaufwasser werden weitere Kostenvorteile erhalten.

Eine weitere bevorzugte Ausgestaltung des erfindungsgemäßen Verfahrens sieht vor, dass der kohlendioxidhaltige Abgasstrom einen ersten und einen zweiten Abgasteilstrom umfasst, wobei es sich bei dem ersten kohlendioxidhaltigen, mit Feststoffpartikeln beladen Abgasteilstrom um Schleusbehälter-Abgas aus der Vergasungsanlage und bei dem zweiten kohlendioxidhaltigen Abgasteilstrom um Abgas aus der Anlage zur Abtrennung von Kohlendioxid und schwefelhaltigen Begleitgasen handelt, das dort bei der Regenerierung des verwendeten, ersten Absorptionsmittels erhalten wird, wobei der zweite kohlendioxidhaltige Abgasteilstrom mindestens teilweise zu der Vergasungsanlage zurückgeführt und dort in dem oder den Schleusbehältern als Spülgas, Transportgas, Inertisierungsgas und/oder Druckeinstellungsgas verwendet wird, wobei Schleusbehälter-Abgas erhalten wird. Dieser Anlagenverbund zwischen Vergasungsanlage und Reinigung des Rohsynthesegases durch Absorption, die sogenannte Gaswäsche, tritt häufig auf, sodass sich in diesen Fällen die Aufgabe ergibt, sowohl das mit Feststoffpartikeln belade Schleusbehälter-Abgas aus der Vergasungsanlage als auch einen bei der Regenerierung des verwendeten, ersten Absorptionsmittels erhaltenen Abgasstrom zu reinigen. Beide Abgasströme enthalten in der Regel Kohlendioxid. Bevorzugt wird daher der zweite kohlendioxidhaltige Abgasteilstrom mindestens teilweise zu der Vergasungsanlage zurückgeführt und dort in dem oder den Schleusbehältern als Spülgas, Transportgas, Inertisierungsgas und/oder Druckeinstellungsgas verwendet wird, wobei Schleusbehälter-Abgas erhalten wird. Auf diese Weise wird der aus der Gaswäsche stammende, zweite kohlendioxidhaltige Abgasteilstrom vor seiner Reinigung nochmals genutzt, wodurch Frischgase zur Beschickung des oder der Schleusbehälter eingespart werden. Dabei wird dieser Abgasteilstrom mit Feststoffpartikeln beladen und kann daher in der erfindungsgemäßen Waschkolonne vorteilhaft gereinigt werden.

### Ausführungsbeispiel

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale für sich oder in beliebiger Kombination den Gegenstand der Erfindung, unabhängig von ihrer Zusammenfassung In den Ansprüchen oder deren Rückbeziehung.

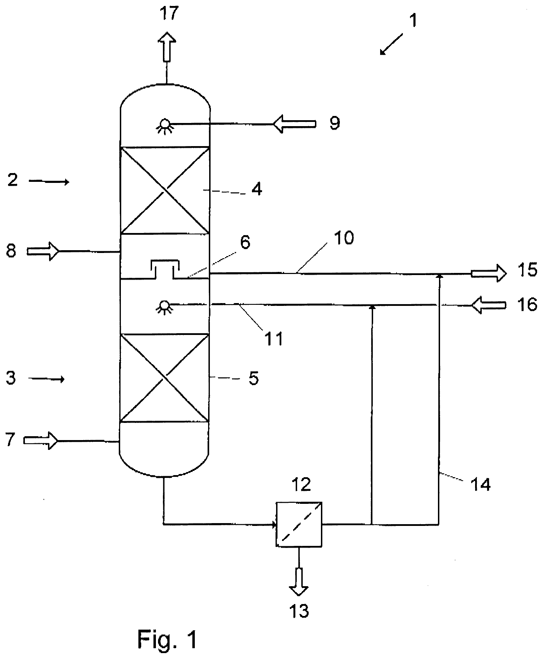

Es zeigt die einzige Figur
- Fig. 1: eine schematische Darstellung eines Längsschnitts durch eine erfindungsgemäße Waschkolonne in beispielhafter Ausführung.

In Fig. 1 umfasst die Waschkolonne 1 eine obere Waschzone (Stoffaustauschzone) 2 und eine untere Waschzone (Stoffaustauschzone) 3. Die obere Waschzone 2 ist mit einer strukturierten Packung 4, die untere Waschzone 3 mit einer Füllkörperpackung 5 ausgestattet. Die in den Zonen jeweils verwendeten Waschflüssigkeiten werden durch einen zwischen den Zonen installierten Kaminboden 6 getrennt gehalten.

Schleusbehälter-Abgas 7, das beim Entspannen aus einem Schleusbehälter einer in Fig. 1 bildlich nicht dargestellten Anlage zur Kohlevergasung abgegeben wurde, die beispielsweise nach dem Flugstromvergasungsverfahren betrieben wird, wird in der unteren Waschzone 3 durch Absorption bzw. Gaswäsche mit Waschwasser 11 von dem im Schleusbehälter aufgenommenem Brennstoffstaub bzw. Partikeln des festen Vergasungseinsatzstoffes befreit. Zuvor wurde ein kohlendioxidhaltiger Gasstrom aus der Regenerierung des Methanols als (erstem) Absorptionsmittel in der der Vergasungsanlage nachgeschalteten, bildlich nicht dargestellten Rectisol-Anlage gewonnen und teilweise als Hilfsgasstrom zum Schleusbehälter zurückgeführt. Daher enthält das Schleusbehälter-Abgas 7 neben Feststoffpartikeln auch einen Anteil dampfförmigen Methanols, das ebenfalls in der Waschkolonne 1 durch Absorption bzw. Gaswäsche mit Wasser aus dem Gasstrom abgetrennt wird. Wenn die Regenerierung des Methanols als (erstem) Absorptionsmittel in der Rectisol-Anlage durch Flashen erfolgt, kann der kohlendioxidhaltige Gasstrom und folglich auch das Schleusbehälter-Abgas 7 auch einen Anteil des Flashgases, beispielsweise Stickstoff, umfassen. Der Flashschritt kann beispielsweise im Reabsorber der Rectisol-Anlage erfolgen.

Der verbliebene, nicht zu den Schleusbehältern der Vergasungsanlage zurückgeführte Anteil des kohlendioxidhaltigen Gasstroms 8 aus der Regenerierung des Methanol-Absorptionsmittels in der Rectisol-Anlage wird in die obere Waschzone 2 der Waschkolonne 1 eingeleitet und dort zusammen mit dem durch den Kaminboden 6 aufsteigenden Schleusbehälter-Gas 7 gewaschen, wobei Methanol abgetrennt und von dem Wasser aufgenommen wird. Als Waschflüssigkeit bzw. (zweites) Absorptionsmittel wird in der oberen Waschzone 2 entmineralisiertes Wasser 9 verwendet, das, mit Methanol beladen, im Kaminboden 6 aufgefangen und zur weiteren Behandlung als Strom 10 über einen am Kaminboden befindlichen Auslass ausgeleitet wird. Die weitere Behandlung umfasst beispielsweise die destillative Auftrennung in Methanol und Wasser, wobei ersteres als erstes .Absorptionsmittel zu der Rectisol-Anlage und letzteres als zweites Absorptionsmittel zu der Waschkolonne 1 mindestens teilweise zurückgeführt wird.

Das Waschwasser 11 der unteren Waschzone 3 wird über einen Partikelabscheider 12 im Kreis geführt. Die darin abgetrennten Feststoffpartikel werden zusammen mit einem Wasserspülstrom 13 zur weiteren Behandlung oder Deponierung ausgetragen. Ein Teil 14 des im Kreis geführten Waschwassers wird zur Aufarbeitung als Wasserspülstrom aus dem Kreislauf ausgeleitet. In diesem Beispiel wird der Wasserspülstrom dem Waschwasser 10 aus der oberen Waschzone 2 beigegeben und als Strom 15 zu einer hier bildlich nicht dargestellten Aufarbeitung ausgeleitet. Mit dem Strom 16 wird dem Waschwasser 11 des Kreislaufs ein Frischwasserstrom zugeführt.

Der von Methanol und Feststoffpartikel befreite, kohlendioxidhaltige Gasstrom 17 wird am Kopf der Waschkolonne 1 in die Atmosphäre ausgeleitet.

### Gewerbliche Anwendbarkeit

Die Erfindung stellt eine Waschkolonne zur Wäsche von Gasströmen zur Verfügung, die mit Absorptionsmittelresten, beispielsweise mit Methanol, und auch mit Feststoffpartikeln, beispielsweise mit Brennstoffstaub, beladen sind. Die erfindungsgemäße Verwendung einer Waschkolonne im Anlagenverbund zwischen einer Vergasungsanlage und einer Anlage zur Gaswäsche, die beispielsweise nach dem Rectisol-Verfahren betrieben wird, bietet besondere Vorteile hinsichtlich ihrer gewerblichen Anwendbarkeit aufgrund der beschriebenen Verschaltungsmöglichkeiten, die Synergien für einen effizienten Betrieb des Anlagenverbunds erbringen.

### Bezugszeichenliste

- 1: Waschkolonne
- 2: obere Waschzone (Stoffaustauschzone)
- 3: untere Waschzone (Stoffaustauschzone)
- 4: strukturierte Packung
- 5: Füllkörperpackung
- 6: Kaminboden
- 7: Schleusbehälterabgas, methanol- und staubbeladen
- 8: CO₂/N₂-Abgas, aus Rückabsorptionskolonne einer Rectisol-Anlage stammend
- 9: entmineralisiertes Wasser
- 10: methanolbeladenes Waschwasser
- 11: Waschwasser
- 12: Partikelabscheider
- 13: Wasserspülstrom, beladen mit Feststoffpartikeln
- 14: methanolbeladenes Waschwasser
- 15: methanölbeladenes Waschwasser zur Aufbereitung
- 16: Frischwasserstrom
- 17: gereinigtes CO₂/N₂-Abgas

## Patentansprüche

1. Verwendung einer Waschkolonne zur Abtrennung von Resten von Methanol als erstem Absorptionsmittel aus einem ersten Abgasteilstrom umfassend einen kohlendioxidhaltigen Abgasstrom einer Vergasungsanlage zur Erzeugung von Synthesegas aus kohlenstoffhaltigen Einsatzstoffen und aus einem zweiten Abgasteilstrom aus einer der Vergasungsanlage nachgeschalteten Anlage zur Abtrennung von Kohlendioxid und schwefelhaltigen Begleitgasen aus dem Synthesegas durch Absorption mit Methanol, wobei als zweites Absorptionsmittel Wasser verwendet wird, wobei die Waschkolonne folgende Bestandteile und Baugruppen umfasst:
- einen Mantel, der sich - bezogen auf einen bestimmungsgemäß angeordneten Zustand der Waschkolonne - entlang einer parallel zur Vertikalen verlaufenden Längsachse erstreckt und der einen Innenraum umschließt, wobei der Innenraum in einen oberen und einen unteren Bereich unterteilt ist, die jeweils mit einer Stoffaustauschzone ausgestattet sind,
- eine im oberen Bereich des Innenraums angeordnete, strukturierte Packung zur Abtrennung von Resten des ersten Absorptionsmittels aus dem zweiten Abgasteilstrom durch Absorption mit einem zweiten Absorptionsmittel,
- einen oberhalb der strukturierten Packung angeordneten Einlass für das zweite Absorptionsmittel,
- einen unterhalb der strukturierten Packung angeordneten Einlass für den zweiten Abgasteilstrom,
- eine im unteren Bereich des Innenraums und unterhalb des Einlasses für den zweiten Abgasteilstrom angeordnete Füllkörperpackung,
- einen unterhalb der Füllkörperpackung angeordneten Einlass für den ersten, mit Feststoffpartikeln beladenen Abgasteilstrom,
- einen an der Oberseite des Mantels angeordneten Auslass für den von Resten des ersten Absorptionsmittels und von Feststoffpartikeln befreiten, kohlendioxidhaltigen Abgasstrom,
- einen an der Unterseite des Mantels angeordneten Auslass für das mit Resten des ersten Absorptionsmittels und mit Feststoffpartikeln beladene zweite Absorptionsmittel.

2. Verwendung nach Anspruch 1, **dadurch gekennzeichnet, dass** es sich bei der Vergasungsanlage um eine Flugstromvergasungsanlage handelt, in der feinpartikuläre Kohle zu durch Vergasung zu Synthesegas umgesetzt wird.

3. Verwendung nach Anspruch 1 oder 2, **dadurch gekennzeichnet, dass** es sich bei dem ersten kohlendioxidhaltigen, mit Feststoffpartikeln beladen Abgasteilstrom um Schleusbehälter-Abgas aus der Vergasungsanlage und bei dem zweiten kohlendioxidhaltigen Abgasteilstrom um Abgas aus der Anlage zur Abtrennung von Kohlendioxid und schwefelhaltigen Begleitgasen handelt, das dort bei der Regenerierung des verwendeten, ersten Absorptionsmittels zweiten kohlendioxidhaltigen Abgasteilstrom erhalten wird.

4. Verwendung nach Anspruch 3, **dadurch gekennzeichnet, dass** der zweite kohlendioxidhaltige Abgasteilstrom mindestens teilweise zu der Vergasungsanlage zurückgeführt und dort in dem oder den Schleusbehältern als Spülgas, Transportgas, Inertisierungsgas und/oder Druckeinstellungsgas verwendet wird, wobei Schleusbehälter-Abgas erhalten wird.

5. Verwendung nach einem der vorigen Ansprüche, **dadurch gekennzeichnet, dass** es sich bei dem als zweites Absorptionsmittel verwendeten Wasser zur Beaufschlagung der strukturierten Packung um entmineralisiertes Frischwasser und bei dem Wasser zur Beaufschlagung der Füllkörperpackung um entmineralisiertes, im Kreislauf über eine Feststoffabtrennungsvorrichtung geführtes Wasser handelt und wobei aus dem Kreislauf ein Wasserspülstrom ausgeleitet und ein Frischwasserstrom als Ergänzungsstrom eingeleitet wird.

6. Verwendung nach einem der vorigen Ansprüche, **dadurch gekennzeichnet, dass** das zur Beaufschlagung der strukturierten Packung verwendete Wasser und der Wasserspülstrom gemeinsam oder getrennt durch Destillation von ihrer Methanolbeladung befreit werden, wobei das dabei abgetrennte Methanol mindestens teilweise als erstes Absorptionsmittel in der Anlage zur Abtrennung von Kohlendioxid und schwefelhaltigen Begleitgasen wiederverwendet wird und das dabei abgetrennte Wasser mindestens teilweise zur Beaufschlagung der Füllkörperpackung wiederverwendet wird.

7. Verwendung nach Anspruch 1, **dadurch gekennzeichnet, dass** die Waschkolonne ferner umfasst:
- einen Trennboden, der für aufwärts strömende Gase passierbar, aber für abwärts strömende Flüssigkeiten unpassierbar ist und der unterhalb der strukturierten Packung und unterhalb des Eintritts für den zweiten Abgasteilstrom, aber oberhalb der Füllkörperpackung angeordnet ist,
- einen zweiten Einlass für das zweite Absorptionsmittel, der unterhalb des Trennbodens und oberhalb der Füllkörperpackung angeordnet ist,
- einen Auslass zum Ausleiten des mit Resten des ersten Absorptionsmittels beladenen zweiten Absorptionsmittels von dem Trennboden.

8. Verwendung nach Anspruch 7 1, **dadurch gekennzeichnet, dass** der Trennboden als Kaminboden ausgestaltet ist.

9. Verwendung nach Anspruch 7 oder 8 **dadurch gekennzeichnet, dass** der zweite Einlass für das zweite Absorptionsmittel, der unterhalb des Trennbodens und oberhalb der Füllkörperpackung angeordnet ist, und der an der Unterseite des Mantels angeordnete Auslass für das mit Resten des ersten Absorptionsmittels und mit Feststoffpartikeln beladene zweite Absorptionsmittel miteinander in Fluidverbindung stehen, wobei die Waschkolonne ferner umfasst:
- eine Feststoffabtrennungsvorrichtung zur Abtrennung von Feststoffpartikeln aus dem zweiten Absorptionsmittel, die mit dem der an der Unterseite des Mantels angeordneten Auslass in Fluidverbindung steht,
- einen Auslass zum Ausleiten des von Feststoffpartikeln mindestens teilweise befreiten, zweiten Absorptionsmittels aus der Feststoffabtrennungsvorrichtung, der mit dem zweiten Einlass für das zweite Absorptionsmittel in Fluidverbindung steht, sodass das von Feststoffpartikeln mindestens teilweise befreite, zweite Absorptionsmittel zu der Waschkolonne zurückgeführt werden kann.

10. Verfahren zur mindestens teilweisen Abtrennung von Feststoffpartikeln und Resten eines ersten Absorptionsmittels aus einem kohlendioxidhaltigen Abgasstrom, wobei der Abgasstrom umfasst:
- einen ersten kohlendioxidhaltigen Abgasteilstrom, erhalten aus einer Vergasungsanlage zur Erzeugung von Synthesegas aus kohlenstoffhaltigen Einsatzstoffen, wobei der erste Abgasteilstrom zusätzlich mit Feststoffpartikeln beladen ist,
- einen zweiten kohlendioxidhaltigen Abgasteilstrom, erhalten aus einer der Vergasungsanlage nachgeschalteten Anlage zur Abtrennung von Kohlendioxid und schwefelhaltigen Begleitgasen aus dem Synthesegas durch Absorption mit dem ersten Absorptionsmittel, umfassend folgende Verfahrensschritte:
(a) Bereitstellen des ersten kohlendioxidhaltigen Abgasteilstroms und des zweiten kohlendioxidhaltigen Abgasteilstroms,
(b) Bereitstellen einer Waschkolonne, wobei die Waschkolonne folgende Bestandteile und Baugruppen umfasst:
- einen Mantel, der sich - bezogen auf einen bestimmungsgemäß angeordneten Zustand der Waschkolonne - entlang einer parallel zur Vertikalen verlaufenden Längsachse erstreckt und der einen Innenraum umschließt, wobei der Innenraum in einen oberen und einen unteren Bereich unterteilt ist, die jeweils mit einer Stoffaustauschzone ausgestattet sind,
- eine im oberen Bereich des Innenraums angeordnete, strukturierte Packung zur Abtrennung von Resten des ersten Absorptionsmittels aus dem zweiten Abgasteilstrom durch Absorption mit einem zweiten Absorptionsmittel,
- einen oberhalb der strukturierten Packung angeordneten Einlass für das zweite Absorptionsmittel,
- einen unterhalb der strukturierten Packung angeordneten Einlass für den zweiten Abgasteilstrom,
- eine im unteren Bereich des Innenraums und unterhalb des Einlasses für den zweiten Abgasteilstrom angeordnete Füllkörperpackung,
- einen unterhalb der Füllkörperpackung angeordneten Einlass für den ersten, mit Feststoffpartikeln beladenen Abgasteilstrom,
- einen an der Oberseite des Mantels angeordneten Auslass für den von Resten des ersten Absorptionsmittels und von Feststoffpartikeln befreiten, kohlendioxidhaltigen Abgasstrom,
- einen an der Unterseite des Mantels angeordneten Auslass für das mit Resten des ersten Absorptionsmittels und mit Feststoffpartikeln beladene zweite Absorptionsmittel,
(c) Zuführen des ersten kohlendioxidhaltigen Abgasteilstroms, beladen mit Feststoffpartikeln und Resten des ersten Absorptionsmittels, zu der Waschkolonne,
(d) Zuführen des zweiten kohlendioxidhaltigen Abgasteilstroms, beladen mit Resten des ersten Absorptionsmittels, zu der Waschkolonne,
(e) Zuführen eines Stroms des zweiten Absorptionsmittels zu der Waschkolonne,
(f) Ausleiten eines mindestens teilweise von Feststoffpartikeln und Resten des ersten Absorptionsmittels befreiten, kohlendioxidhaltigen Abgasstroms aus der Waschkolonne,
(g) Ausleiten des mit den abgetrennten Feststoffpartikeln und Resten des ersten Absorptionsmittels beladenen Stroms des zweiten Absorptionsmittels aus der Waschkolonne.

## Claims

1. Use of a scrubbing column for removal of residues of methanol as first absorbent from a first offgas substream comprising a carbon dioxide-containing offgas stream from a gasification plant for production of synthesis gas from carbonaceous feedstocks and from a second carbon dioxide-containing offgas substream obtained from a plant, connected downstream of the gasification plant, for separation of carbon dioxide and sulfur-containing accompanying gases from the synthesis gas by absorption with methanol, with use of water as second absorbent, where the scrubbing column comprises the following constituents and assemblies:
- a shell which - based on a state of the scrubbing column arranged as intended - extends along a longitudinal axis that runs parallel to the vertical and which encloses an interior, where the interior is divided into an upper region and a lower region, each of which is equipped with at least one mass transfer zone,
- a structured packing, disposed in the upper region of the interior, for separating residues of the first absorbent from the second offgas substream by absorption with a second absorbent,
- an inlet for the second absorbent disposed above the structured packing,
- an inlet for the second offgas substream disposed below the structured packing,
- a random packing disposed in the lower region of the interior and below the inlet for the second offgas substream,
- an inlet for the first offgas substream laden with solid particles which is disposed below the random packing,
- an outlet, disposed on the outside of the shell, for the carbon dioxide-containing offgas stream that has been freed of residues of the first absorbent and of solid particles,
- an outlet, disposed on the underside of the shell, for the second absorbent laden with residues of the first absorbent and with solid particles.

2. Use according to Claim 1, **characterized in that** the gasification plant is an entrained flow gasification plant in which fine particulate coal is converted to synthesis gas by gasification.

3. Use according to Claim 1 or 2, **characterized in that** the first carbon dioxide-containing offgas substream laden with solid particles is lock hopper offgas from the gasification plant and the second carbon dioxide-containing offgas substream is offgas from the plant for separation of carbon dioxide and sulfur-containing accompanying gases which is obtained therein in the regeneration of the first absorbent used.

4. Use according to Claim 3, **characterized in that** the second carbon dioxide-containing offgas substream is at least partly recycled to the gasification plant, where it is used in the lock hopper(s) as purge gas, transport gas, inertization gas and/or pressure adjustment gas to obtain lock hopper offgas.

5. Use according to any of the preceding claims, **characterized in that** the water used as the second absorbent for contacting the structured packing is demineralized fresh water, and the water for contacting the random packing is demineralized water circulated through a solids removal apparatus, and wherein a water purge stream is discharged from the circuit and a fresh water stream is introduced as replacement stream.

6. Use according to any of the preceding claims, **characterized in that** the water used for contacting the structured packing and the water purge stream are freed of their methanol load together or separately by distillation, where the methanol separated off is reused at least partly as first absorbent in the plant for separation of carbon dioxide and sulfur-containing accompanying gases and the water separated off is reused at least partly for contacting the random packing.

7. Use according to Claim 1, further comprising:
- a separation tray permeable to gases flowing upward, but impermeable to liquids flowing downward, disposed below the structured packing and below the inlet for the second offgas substream, but above the random packing,
- a second inlet for the second absorbent, disposed below the separation tray and above the random packing,
- an outlet for discharging the second absorbent laden with residues of the first absorbent from the separation tray.

8. Use according to Claim 7, **characterized in that** the separation tray takes the form of a chimney tray.

9. Use according to Claim 7 or 8, **characterized in that** the second inlet for the second absorbent, disposed below the separation tray and above the random packing, and the outlet for the second absorbent laden with residues of the first absorbent and with solid particles, disposed on the underside of the shell, are in fluid connection with one another, where the scrubbing column further comprises:
- a solids separation apparatus for separation of solid particles from the second absorbent, in fluid connection with the outlet disposed on the underside of the shell,
- an outlet for discharge of the second absorbent that has been at least partly freed of solid particles from the solids separation apparatus, in fluid connection with the second inlet for the second absorbent, such that the second absorbent that has been at least partly freed of solid particles can be recycled to the scrubbing column.

10. Process for at least partly separating solid particles and residues of a first absorbent from a carbon dioxide-containing offgas stream, wherein the offgas stream comprises:
- a first carbon dioxide-containing offgas substream obtained from a gasification plant for production of synthesis gas from carbonaceous feedstocks, where the first offgas substream is additionally laden with solid particles,
- a second carbon dioxide-containing offgas substream obtained from a plant, connected downstream of the gasification plant, for separation of carbon dioxide and sulfur-containing accompanying gases from the synthesis gas by absorption with the first absorbent,
comprising the following process steps:
(a) providing the first carbon dioxide-containing offgas substream and the second carbon dioxide-containing offgas substream,
(b) providing a scrubbing column, where the scrubbing column comprises the following constituents and assemblies:
- a shell which - based on a state of the scrubbing column arranged as intended - extends along a longitudinal axis that runs parallel to the vertical and which encloses an interior, where the interior is divided into an upper region and a lower region, each of which is equipped with at least one mass transfer zone,
- a structured packing, disposed in the upper region of the interior, for separating residues of the first absorbent from the second offgas substream by absorption with a second absorbent,
- an inlet for the second absorbent disposed above the structured packing,
- an inlet for the second offgas substream disposed below the structured packing,
- a random packing disposed in the lower region of the interior and below the inlet for the second offgas substream,
- an inlet for the first offgas substream laden with solid particles which is disposed below the random packing,
- an outlet, disposed on the outside of the shell, for the carbon dioxide-containing offgas stream that has been freed of residues of the first absorbent and of solid particles,
- an outlet, disposed on the underside of the shell, for the second absorbent laden with residues of the first absorbent and with solid particles,
(c) feeding the first carbon dioxide-containing offgas substream, laden with solid particles and residues of the first absorbent, to the scrubbing column,
(d) feeding the second carbon dioxide-containing offgas substream, laden with residues of the first absorbent, to the scrubbing column,
(e) feeding a stream of the second absorbent to the scrubbing column,
(f) discharging a carbon dioxide-containing offgas stream that has been at least partly freed of solid particles and residues of the first absorbent from the scrubbing column,
(g) discharging the stream of the second absorbent laden with the separated solid particles and residues of the first absorbent from the scrubbing column.

## Revendications

1. Utilisation d'une colonne de lavage pour séparer des résidus de méthanol, en tant que premier absorbant, d'un premier courant partiel d'effluent gazeux comprenant un courant d'effluent gazeux contenant du dioxyde de carbone d'une installation de gazéification destinée à la production de gaz de synthèse à partir de matières de charge carbonées et d'un deuxième courant partiel d'effluent gazeux provenant d'une installation en aval de l'installation de gazéification pour séparer le dioxyde de carbone et les gaz associés contenant du soufre à partir du gaz de synthèse par absorption avec du méthanol, le deuxième absorbant utilisé étant l'eau, la colonne de lavage comprenant les composants et constituants suivants :
- une calandre qui s'étend, pour un état conforme de la colonne de lavage, le long d'un axe longitudinal courant parallèlement à la verticale, et qui comprend un espace intérieur, l'espace intérieur étant subdivisé en une zone supérieure et une zone inférieure, dont chacune est équipée d'une zone de transfert de masse,
- une garniture structurée, disposée dans la zone supérieure de l'espace intérieur, pour séparer du deuxième courant d'effluent gazeux par absorption avec un deuxième absorbant les résidus du premier absorbant,
- une entrée pour le deuxième absorbant, disposée au-dessus du garnissage structuré,
- une entrée pour le deuxième courant partiel d'effluent gazeux, disposée en dessous du garnissage structuré,
- un garnissage d'éléments de garnissage disposé dans la zone inférieure de l'espace intérieur et en dessous de l'entrée pour le deuxième courant partiel d'effluent gazeux,
- une entrée pour le premier courant partiel d'effluent gazeux chargé de particules solides, disposée en dessous du garnissage d'éléments de garnissage,
- une sortie pour le courant d'effluent gazeux contenant du dioxyde de carbone, débarrassé des résidus du premier absorbant et des particules solides, disposée sur la face supérieure de la calandre,
- une sortie pour le deuxième absorbant chargé des résidus du premier absorbant et des particules solides, disposée sur la face inférieure de la calandre.

2. Utilisation selon la revendication 1, **caractérisée en ce que** l'installation de gazéification est une installation de gazéification à lit entraîné, dans lequel des particules fines de charbon sont converties par gazéification en gaz de synthèse.

3. Utilisation selon la revendication 1 ou 2, **caractérisée en ce que** le premier courant partiel d'effluent gazeux chargé de particules solides, contenant du dioxyde de carbone, est un effluent gazeux d'une cuve sous pression provenant de l'installation de gazéification, et le deuxième courant partiel d'effluent gazeux contenant du dioxyde de carbone est un effluent gazeux de l'installation de séparation du dioxyde de carbone et des gaz associés contenant du soufre, qui y est obtenu lors de la régénération du premier absorbant utilisé.

4. Utilisation selon la revendication 3, **caractérisée en ce que** le deuxième courant partiel d'effluent gazeux contenant du dioxyde de carbone est au moins partiellement renvoyé à l'installation de gazéification et est utilisé dans cette dernière ou dans les cuves sous pression en tant que gaz de rinçage, gaz de transport, gaz d'inertisation et/ou gaz d'ajustement de la pression, avec obtention d'un effluent gazeux des cuves sous pression.

5. Utilisation selon l'une des revendications précédentes, **caractérisée en ce que** l'eau utilisée en tant que deuxième absorbant pour action sur le garnissage structuré est une eau douce déminéralisée, et l'eau pour action sur le garnissage à éléments de garnissage est une eau déminéralisée, circulant en circuit fermé en passant par un dispositif de séparation des solides, un courant d'eau de rinçage étant évacué du circuit fermé, et un courant d'eau fraîche étant introduit en tant que courant d'appoint.

6. Utilisation selon l'une des revendications précédentes, **caractérisée en ce que** l'eau utilisée pour action sur le garnissage structuré et le courant d'eau de rinçage sont simultanément ou séparément débarrassés de leur charge de méthanol par distillation, le méthanol séparé à cette occasion étant partiellement réutilisé comme premier absorbant dans l'installation de séparation du dioxyde de carbone et des gaz associés contenant du soufre, et l'eau séparée à cette occasion étant au moins partiellement réutilisée pour action sur le garnissage à éléments de garnissage.

7. Utilisation selon la revendication 1, **caractérisée en ce que** la colonne de lavage comprend en outre :
- un premier plateau séparateur, qui peut être traversé par des gaz s'écoulant vers le haut mais qui ne peut pas être traversé par des liquides s'écoulant vers le bas, et qui est disposé en dessous du garnissage structuré et en dessous de l'entrée pour le deuxième courant partiel d'effluent gazeux, mais au-dessus du garnissage à éléments de garnissage,
- une deuxième entrée pour le deuxième absorbant, qui est disposée en dessous du plateau séparateur et au-dessus du garnissage à éléments de garnissage,
- une sortie pour évacuer du plateau séparateur le deuxième absorbant chargé des résidus du premier absorbant.

8. Utilisation selon la revendication 7, **caractérisée en ce que** le plateau séparateur est conçu comme un plateau à cheminée.

9. Utilisation selon la revendication 7 ou 8, **caractérisée en ce que** la deuxième entrée pour le deuxième absorbant, qui est disposée en dessous du plateau séparateur et au-dessus du garnissage à éléments de garnissage, et la sortie, disposée sur la face inférieure de la calandre, pour le deuxième absorbant chargé des résidus du premier absorbant et des particules solides, sont en liaison fluidique l'un avec l'autre, la colonne de lavage comprenant en outre :
- un dispositif de séparation des solides pour séparer les particules solides du deuxième absorbant, qui est en liaison fluidique avec la sortie disposée sur la face inférieure de la calandre,
- une sortie pour évacuer du dispositif de séparation des solides le deuxième absorbant, au moins partiellement débarrassé des particules solides, et qui est en liaison fluidique avec la deuxième entrée pour le deuxième absorbant, de sorte que le deuxième absorbant, au moins partiellement débarrassé des particules solides, peut être renvoyé dans la colonne de lavage.

10. Procédé de séparation au moins partielle de particules solides et de résidus d'un premier absorbant à partir d'un courant d'effluent gazeux contenant du dioxyde de carbone, le courant d'effluent gazeux comprenant :
- un premier courant partiel d'effluent gazeux contenant du dioxyde de carbone, obtenu à partir d'une installation de gazéification pour produire du gaz de synthèse à partir de matières de charge carbonées, le premier courant partiel d'effluent gazeux étant en outre chargé de particules solides,
- un deuxième courant partiel d'effluent gazeux contenant du dioxyde de carbone, obtenu à partir d'une installation en aval de l'installation de gazéification pour séparer du gaz de synthèse par absorption avec le premier absorbant le dioxyde de carbone et les gaz associés contenant du soufre, comprenant les étapes suivantes :
(a) fourniture du premier courant partiel d'effluent gazeux contenant du dioxyde de carbone et du deuxième courant partiel d'effluent gazeux contenant du dioxyde de carbone,
(b) fourniture d'une colonne de lavage, la colonne de lavage comprenant les composants et constituants suivants :
- une calandre qui s'étend, pour un état conforme de la colonne de lavage, le long d'un axe longitudinal courant parallèlement à la verticale, et qui renferme un espace intérieur, l'espace intérieur étant subdivisé en une zone supérieure et une zone inférieure, dont chacune est équipée d'une zone de transfert de masse,
- un garnissage structuré, disposé dans la zone supérieure de l'espace intérieur, pour séparer du deuxième courant partiel d'effluent gazeux par absorption avec un deuxième absorbant les résidus du premier absorbant ,
- une entrée pour le deuxième absorbant, disposée au-dessus du garnissage structuré,
- une entrée pour le deuxième courant partiel d'effluent gazeux, disposée en dessous du garnissage structuré,
- un garnissage à éléments de garnissage disposé dans la zone inférieure de l'espace intérieur et en dessous de l'entrée pour le deuxième courant partiel d'effluent gazeux,
- une entrée pour le premier courant partiel d'effluent gazeux chargé de particules solides, disposée en dessous du garnissage à éléments de garnissage,
- une sortie pour le courant d'effluent gazeux contenant du dioxyde de carbone, débarrassé des résidus du premier absorbant et des particules solides, disposée sur la face supérieure de la calandre,
- une sortie pour le deuxième absorbant, chargé des résidus du premier absorbant et des particules solides,
(c) amenée du premier courant partiel d'effluent gazeux contenant du dioxyde de carbone, chargé des particules solides et des résidus du premier absorbant, à la colonne de lavage,
(d) amenée du deuxième courant partiel d'effluent gazeux contenant du dioxyde de carbone, chargé des résidus du premier absorbant, à la colonne de lavage,
(e) amenée d'un courant du deuxième absorbant à la colonne de lavage,
(f) évacuation, à partir de la colonne de lavage, d'un courant d'effluent gazeux contenant du dioxyde de carbone, au moins partiellement débarrassé des particules solides et des résidus du premier absorbant,
(g) évacuation, à partir de la colonne de lavage, du courant du deuxième absorbant chargé des particules solides séparées et des résidus séparés du premier absorbant.
